# EUROPÄISCHE PATENTSCHRIFT

(11) **EP 2 586 098 B1**
(45) Veröffentlichungstag und Bekanntmachung des Hinweises auf die Patenterteilung: **13.11.2019**
(21) Anmeldenummer: 10739474.4
(22) Anmeldetag: 25.06.2010
(51) Int. Cl.: H01Q 9/26, H01Q 1/22, H01Q 7/00, H01Q 9/28, H01Q 5/321, G06K 19/077

(54) **DETEKTIERPLÄTTCHEN**
DETECTION LABEL
ÉTIQUETTE DÉTECTRICE

(43) Veröffentlichungstag der Anmeldung: 01.05.2013
(73) Patentinhaber: ASTRA Gesellschaft für Asset Management mbH & Co. KG, 30890 Barsinghausen (DE)
(72) Erfinder: STOBBE, Anatoli, 30890 Barsinghausen (DE); MAAS, Norman, 30455 Hannover (DE)
(74) Vertreter: Patentanwälte Thömen & Körner
(86) Internationale Anmeldenummer: PCT/DE2010/000734
(87) Internationale Veröffentlichungsnummer: WO 2011/160606

(56) Entgegenhaltungen:
- EP-A2- 1 870 797
- WO-A1-02/39379
- DE-A1-102008 027 246
- FR-A1- 2 869 707
- US-A1- 2005 093 677
- US-A1- 2007 052 613

## Beschreibung

Die Erfindung betrifft ein Detektierplättchen nach dem Oberbegriff des Anspruchs 1.

Als Detektierplättchen bezeichnet man einen Datenträger mit einem elektronischen Chip, der berührungslos von einem Lesegerät gelesen und gegebenenfalls auch beschrieben werden kann. Die für den Betrieb seines Chips benötigte Energie erhält er berührungslos vom Lesegerät. Sowohl die Datenübertragung als auch die Energieübertragung erfolgt durch ein elektromagnetisches Feld.

Soweit Detektierplättchen zur Identifizierung von Personen dienen, können sie die Größe einer Checkkarte haben; bei Identifizierung von Gegenständen sind ggf. auch kleinere Größen nötig.

Bei Detektierplättchen mit einer Betriebsfrequenz im LF- oder HF-Bereich sind mechanisch auf Lambda Halbe abgestimmte Antennen nicht realisierbar. Antennenresonanz lässt sich nur durch Einsatz konzentrierter Bauelemente ausführen. Die Antenne ist daher zumeist als Antennenspule eines Schwingkreises ausgeführt. Bei Detektierplättchen mit einer Betriebsfrequenz im UHF- und SHF-Bereich sind hingegen Dipolantennen der Abmessungen Lambda Halbe oder wenigstens mechanisch verkürzte, aber elektrisch verlängerte Dipolantennen realisierbar.

Allerdings sind Dipolantennen empfindlich gegenüber benachbarten Gegenständen. Gegenstände mit dielektrischer Leitfähigkeit können zu einer Verstimmung der Antennenresonanzfrequenz führen. Elektrisch leitfähige Gegenstände, insbesondere metallische Gegenstände, können Energie absorbieren, abschirmen oder ebenfalls zu einer Verstimmung der Antennenresonanzfrequenz führen.

Entsprechende Detektierplättchen sind aus der DE 10 2008 027 246 A1, sowie der US 2005/0093677 A1 bekannt.

Der Erfindung liegt die Aufgabe zugrunde, ein Detektierplättchen zu schaffen, dessen Lesereichweite im Vergleich zu Detektierplättchen mit einer als gestreckter Dipol ausgebildeten Antenne weniger stark durch dielektrisch oder elektrisch leitfähige Gegenstände beeinflusst wird.

Diese Aufgabe wird bei einem Detektierplättchen nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei einer schleifenförmigen Form des Antennenleiters wird die magnetische Komponente des elektromagnetischen Feldes stärker konzentriert als bei einer gestreckten Form des Antennenleiters. Besonders ausgeprägt ist dieser Effekt bei einer vollständig geschlossenen Schleife. Da Detektierplättchen zur Identifizierung von Personen, Tieren oder Gegenständen dienen, befindet sich der Antennenleiter des Detektierplättchens in der Nähe von Gewebe oder Materialien mit einer gegenüber dem Freifeld abweichenden Dielektrizität. Neben einer Verstimmung der Resonanzfrequenz führen diese Gewebe oder Materialien zu einer Absorption der elektrischen Komponente des elektromagnetischen Feldes. Hingegen würde die magnetische Komponente nur durch ferromagnetische Materialien absorbiert werden, so dass bei Fehlen derartiger Materialien keine Schwächung der magnetischen Komponente des elektromagnetischen Feldes auftritt. Solange nur die elektrische Komponente des elektromagnetischen Feldes beeinträchtigt wird, sorgt die magnetische Komponente des elektromagnetischen Feldes trotzdem für eine ausreichende Leserreichweite. Dies ist insbesondere dann der Fall, wenn Detektierplättchen am Körper getragen werden oder zur Identifizierung von Wäschestücken Feuchtigkeit ausgesetzt sind.

Die erfindungsgemäße Lösung kommt ohne Kontaktierung des Antennenleiters aus. Sie ist daher weit gehend resistent gegen chemische Einflüsse und sehr widerstandsfähig gegen mechanische Beanspruchungen.

Als Chipmodul wird die Kombination eines Chips mit einem induktiven Koppelelement auf einem ersten Träger bezeichnet. Als Chip wird ein integrierter Schaltkreis bezeichnet, der die Komponenten Datensender, Datenempfänger, Energieempfänger, Controller mit Steuerprogramm und einem nichtflüchtigen Speicher für speicherbare Daten umfasst. Als Antennenmodul wird die Kombination eines Antennenleiters in oder auf einem zweiten Träger bezeichnet. Im Falle einer Befestigung des Antennenleiters auf dem zweiten Träger durch textile Sticktechnik ist der zweite Träger vorzugsweise ein textiles Flächengebilde. Im Falle einer Befestigung des Antennenleiters auf dem zweiten Träger durch Drahtverlegetechnik ist der zweite Träger vorzugsweise eine Folie oder eine Karte aus Kunststoff.

Bei einer vorteilhaften Ausgestaltung weist die Antennenschleife die Struktur eines Rechteckes auf und an einem der Schenkel des Rechteckes sind Endbereiche des Drahtes über den Umfang einer ganzen Windung hinaus parallel nebeneinander liegend angeordnet.

Die parallel verlaufenden Enden bilden einen Kapazitätsbelag, der im Vergleich zu gegenüberstehenden Enden zu einem flacheren Spannungsmaximum und damit zu einer ausgeglichenen Stromverteilung und Anhebung der magnetischen Komponente des elektromagnetischen Feldes führt. Außerdem wird die Resonanzbreite des durch die Antennenschleife gebildeten Schwingkreises vergrößert.

Der geometrische Umfang der Antennenschleife kann das Ein- oder Mehrfache vom Lambda Halbe der Wellenlänge eines das Detektierrplättchen berührungslos lesenden Lesegerätes sein.

Im Falle einer Verstimmung der Antenne erhöht sich so die Wahrscheinlichkeit, dass wieder Resonanz mit der Betriebsfrequenz eines berührungslos lesenden Lesegerätes erzielt wird. In diesem Fall erreicht auch die elektrische Komponente des elektromagnetischen Feldes ein Maximum und trägt darin zu einer größeren Leserreichweite bei.

Die Antennenschleife kann aus mehreren Windungen bestehen und einerseits eine Antennenspule eines im HF- oder LF-Bereich abgestimmten Schwingkreises zusammen mit einem Chip eines HF- oder LF-Detektierplättchens darstellen, wobei die Antennenspule mit den Enden (38, 40) des Drahtes galvanisch mit Anschlüssen des Chips (42) verbunden ist, und andererseits können die parallel verlaufenden Windungen des Drahtes eine Einwindungsantenne für den UHF-Bereich darstellen.

In diesem Fall bildet dieselbe Antennenschleife eine Kombiantenne für zwei unterschiedliche Betriebsfrequenzen.

Nachfolgend wird die Erfindung anhand von Ausführungsbeispielen erläutert, die in der Zeichnung dargestellt sind.

In der Zeichnung zeigen:
- Fig. 1: ein Detektierplättchen mit einem durch Sticktechnik befestigten Antennenleiter und
- Fig. 2: ein Detektierplättchen mit einem durch Drahtverlegetechnik befestigten Antennenleiter als Kombiantenne.

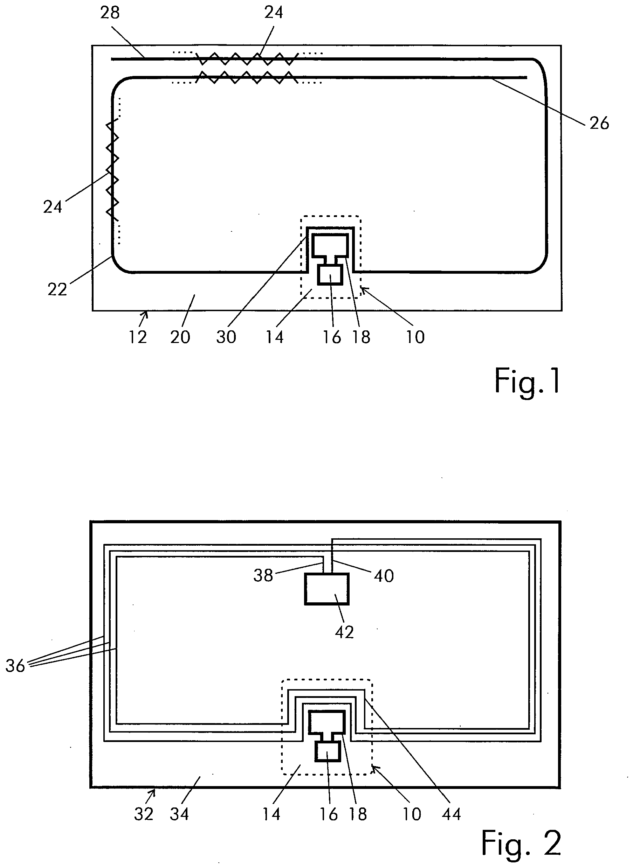

Das in Fig. 1 dargestellte Detektierplättchen umfasst ein Chipmodul 10 und ein Antennenmodul 12. Das Chipmodul 10 besteht aus einem ersten Träger 14 mit einem Chip 16 und einer mit dem Chip 16 verbundenen Koppelschleife 18. Das Antennenmodul 12 besteht aus einem zweiten Träger 20 mit einem Antennenleiter 22. Der Träger 20 ist ein textiles Flächengebilde. Der Antennenleiter 22 bis ein isolierter Draht, der durch Sticktechnik mittels Stickgarn 24 auf dem Träger 20 mechanisch befestigt ist.

Der Antennenleiter 22 ist nach Art einer Schleife in der Form eines Rechteckes strukturiert. An einem Schenkel des Rechteckes sind Endbereiche 26, 28 des Antennenleiters 22 überlappend parallel mit geringem Abstand zueinander befestigt. Auf der diesem Schenkel gegenüberliegenden Seite ist eine Schlaufe 30 ausgebildet, die für eine enge Kopplung der Antennenschleife mit der Koppelschleife 18 des Chipmoduls 10 sorgt. Das Chipmodul 10 ist mit seinem ersten Träger 14 so auf dem zweiten Träger 20 positioniert und befestigt, dass die Koppelschleife 18 durch die Schlaufe 30 umschlossen wird.

Das in Fig. 2 dargestellte Detektierplättchen unterscheidet sich von dem in Fig. 1 gezeigten durch die Ausgestaltung des Antennenmoduls 32. Das Antennenmodul 32 besteht aus einem zweiten Träger 34 aus einer Kunststoffkarte, auf dem ein Antennenleiter 36 durch Verlegetechnik angeordnet und befestigt ist. Der Antennenleiter 36 umfasst mehrere Windungen, deren Enden 38, 40 zu einem Chip 42 für den HF-Bereich geführt und mit Anschlüssen des Chips 42 verschweißt sind.

Die Windungen der durch den Antennenleiter 36 gebildeten Schleife haben ebenfalls eine Rechteckstruktur. An der dem Chip 42 gegenüberliegenden Seite verlaufen Windungsbereiche als Schlaufe 44. Analog zu Fig. 1 ist das Chipmodul 10 mit seinem ersten Träger 14 so auf dem zweiten Träger 34 positioniert und befestigt, dass die Koppelschleife 18 durch die Schlaufe 44 umschlossen wird. Die mehreren Windungen des Antennenleiters 36 verhalten sich durch kapazitiven Schluss für das Chipmodul 10 im UHF-Bereich wie eine Einwindungsantenne analog zu der Darstellung nach Fig. 1.

## Patentansprüche

1. Detektierplättchen, umfassend ein Chipmodul (10) aus einem ersten Träger (14) mit einem Chip (16) und einer mit dem Chip (16) verbundenen induktiven Koppelschleife (18) und umfassend ein Antennenmodul (12) aus einem zweiten Träger (20) und einem Antennenleiter (22), wobei das Chipmodul (10) in oder auf dem Antennenmodul (12) angeordnet ist und die Koppelschleife (18) induktiv mit dem Antennenleiter (22) gekoppelt ist, wobei der Antennenleiter (22) eine offene Antennenschleife ist und aus einem Draht besteht, der als wenigstens eine Windung ausgeführt ist und durch textile Sticktechnik oder durch Drahtverlegetechnik mechanisch mit dem zweiten Träger (20) verbunden ist, wobei benachbart liegende Windungen und die Enden des Drahtes gegenseitig isoliert sind, und die Enden des Drahtes einen Kapazitätsbelag bilden.

2. Detektierplättchen nach Anspruch 1, **dadurch gekennzeichnet, dass** die Antennenschleife (22) die Struktur eines Rechteckes aufweist und an einem der Schenkel des Rechteckes Endbereiche (26, 28) des Drahtes über den Umfang einer ganzen Windung hinaus parallel nebeneinander liegend angeordnet sind.

3. Detektierplättchen nach Anspruch 1 oder 2, **dadurch gekennzeichnet, dass** der geometrische Umfang der Antennenschleife (22) das Ein- oder Mehrfache von Lambda Halbe der Betriebswellenlänge eines das Detektierplättchen berührungslos lesenden Lesegerätes ist.

4. Detektierplättchen nach einem der Ansprüche 1 bis 3, **dadurch gekennzeichnet, dass** die Antennenschleife (36) aus mehreren Windungen besteht und die Antennenschleife (36) einerseits eine Antennenspule eines im HF- oder LF-Bereich abgestimmten Schwingkreises zusammen mit einem Chips (42) eines HF- oder LF Detektierplättchens darstellt, wobei die Antennenspule mit den Enden (38, 40) des Drahtes galvanisch mit Anschlüssen des Chips (42) verbunden ist, und andererseits die parallel verlaufenden Windungen des Drahtes eine Einwindungsantenne für den UHF-Bereich darstellt, wobei an der dem Chip (42) gegenüberliegenden Seite verlaufende Windungsbereiche als Schlaufe (44) ausgebildet sind und das Chipmodul (10) mit seinem ersten Träger (14) so auf einem zweiten Träger (34) positioniert und befestigt ist, dass die Koppelschleife (18) durch die Schlaufe (44) umschlossen ist.

## Claims

1. Small detection plate, comprising a chip module (10) made of a first carrier (14) with a chip (16) and an inductive coupling loop (18) connected to the chip (16), and comprising an antenna module (12) made of a second carrier (20) and an antenna conductor (22), wherein the chip module (10) is arranged in or on the antenna module (12) and the coupling loop (18) is coupled inductively to the antenna conductor (22), wherein the antenna conductor (22) is an open antenna loop and consists of a wire which is implemented as at least one turn and is connected mechanically to the second carrier (20) by textile embroidery technology or wire laying technology, wherein adjacently located turns and the ends of the wire are insulated relative to each other, and the ends of the wire form a capacitance per unit length.

2. Small detection plate according to Claim 1, **characterized in that** the antenna loop (22) has the structure of a rectangle and, on one of the sides of the rectangle, end regions (26, 28) of the wire are arranged so as to lie parallel next to one another beyond the circumference of a complete turn.

3. Small detection plate according to Claim 1 or 2, **characterized in that** the geometric circumference of the antenna loop (22) is one or many times half the operating wavelength of a reading device reading the small detection plate without contact.

4. Small detection plate according to one of Claims 1 to 3, **characterized in that** the antenna loop (36) consists of multiple turns, and the antenna loop (36) firstly represents an antenna coil of a tuned circuit tuned in the HF or LF range together with a chip (42) of an HF or LF small detector plate, wherein the antenna coil is electrically connected to the terminals of the chip (42) by way of the ends (38, 40) of the wire, and secondly represents the parallel turns of the wire of a single-turn antenna for the UHF range, wherein turn regions extending on the side opposite the chip (42) are formed as a curve (44), and the chip module (10) is positioned and fixed with its first carrier (14) on a second carrier (34) such that the coupling loop (18) is enclosed by the curve (44).

## Revendications

1. Plaquette de détection, comprenant un module de puce (10) constitué d'un premier support (14) portant une puce (16) et d'une boucle de couplage inductive (18) reliée à la puce (16) et comprenant un module d'antenne (12) constitué d'un second support (20) et d'un conducteur d'antenne (22), dans lequel le module de puce (10) est disposé dans ou sur le module d'antenne (12) et la boucle de couplage (18) est couplée de manière inductive au conducteur d'antenne (22), dans lequel le conducteur d'antenne (22) est une boucle d'antenne ouverte et est constitué d'un fil qui est réalisé sous la forme d'au moins un enroulement et est relié mécaniquement au second support (20) par une technique de tressage textile ou par une technique de câblage, dans lequel des spires adjacentes et les extrémités du fil sont mutuellement isolées, et les extrémités du fil forment un revêtement capacitif.

2. Plaquette de détection selon la revendication 1, **caractérisée en ce que** la boucle d'antenne (22) présente la structure d'un rectangle et **en ce que** des zones d'extrémité (26, 28) du fil sont disposées parallèlement les unes aux autres sur l'un des côtés du rectangle sur toute la circonférence d'une spire.

3. Plaquette de détection selon la revendication 1 ou 2, **caractérisée en ce que** la circonférence géométrique de la boucle d'antenne (22) est égale à une ou plusieurs fois la moitié de la longueur d'onde de fonctionnement lambda d'un appareil de lecture qui lit sans contact la plaquette de détection.

4. Plaquette de détection selon l'une des revendications 1 à 3, **caractérisée en ce que** la boucle d'antenne (36) est constituée d'une pluralité de spires et **en ce que** la boucle d'antenne (36) représente d'une part une bobine d'antenne d'un circuit résonant accordé dans le domaine HF ou LF en association avec une puce (42) d'une plaquette de détection HF ou LF, la bobine d'antenne étant reliée électriquement aux bornes de la puce (42) par les extrémités (38, 40) du fil, et représente d'autre part les spires s'étendant parallèlement du fil d'une antenne à une seule spire pour le domaine UHF, dans lequel des zones d'enroulement s'étendant sur la face opposée à la puce (42) sont réalisées sous la forme d'une patte (44) et le module de puce (10) est positionné avec son premier support (14) sur un second support (34) et y est fixé de telle manière que la boucle de couplage (18) soit entourée par la boucle (44).
